# EUROPEAN PATENT SPECIFICATION

(11) **EP 3 945 790 B1**
(45) Date of publication and mention of the grant of the patent: **05.11.2025**
(21) Application number: 20717726.2
(22) Date of filing: 26.03.2020
(51) Int. Cl.: A01J 25/11, A01J 25/12, A01J 25/16, A23C 19/00

(54) **METHOD FOR MILKING DAIRY ANIMALS AND FOR MANUFACTURING OF CHEESE OR RENNET FREE DAIRY PRODUCT OUT OF THE OBTAINED MILK AND MILKING MACHINE FOR MILKING OF DAIRY ANIMALS COUPLED TO A PRODUCTION LINE FOR MANUFACTURING CHEESE OR RENNET FREE DAIRY PRODUCT**
VERFAHREN ZUM MELKEN VON MILCHVIEH UND ZUR HERSTELLUNG VON KÄSE ODER LABFREIEN MILCHPRODUKTEN AUS DER ERHALTENEN MILCH UND MELKMASCHINE ZUM MELKEN VON MILCHVIEH, DIE AN EINE PRODUKTIONSLINIE ZUR HERSTELLUNG VON KÄSE ODER LABFREIEN MILCHPRODUKTEN GEKOPPELT IST
PROCÉDÉ DE TRAITE D'ANIMAUX LAITIERS ET DE FABRICATION DE FROMAGE OU DE PRODUIT LAITIER EXEMPT DE PRÉSURE À PARTIR DU LAIT OBTENU ET MACHINE DE TRAITE POUR ANIMAUX LAITIERS ACCOUPLÉE À UNE CHAÎNE DE PRODUCTION POUR FABRIQUER DU FROMAGE OU UN PRODUIT LAITIER EXEMPT DE PRÉSURE

(30) Priority: 28.03.2019 NL 2022833
(43) Date of publication of application: 09.02.2022
(73) Proprietor: Lely Patent N.V., 3147 PB Maassluis (NL)
(72) Inventor: VAN ADRICHEM, Paulus Jacobus Maria, 3147 PB Maassluis (NL); VAN DEN BERG, Karel, 3147 PB Maassluis (NL); HUYZER, Arie, 3147 PB Maassluis (NL); KLOMPE, Robbert, 3147 PB Maassluis (NL)
(74) Representative: Octrooibureau Van der Lely N.V.
(86) International application number: PCT/NL2020/050203
(87) International publication number: WO 2020/197392

(56) References cited:
- EP-A1- 0 666 024
- EP-A1- 0 739 584
- EP-B1- 0 666 024
- EP-B1- 0 739 584
- WO-A1-2017/051414
- WO-A1-97/20458
- ES-A1- 2 397 904
- ES-B1- 2 397 904
- FR-A1- 2 895 213
- FR-B1- 2 895 213
- US-A1- 2007 048 403

## Description

The present invention relates to a method for milking dairy animals and manufacturing cheese or a rennet-free dairy product from the milk obtained and to a milking machine for milking dairy animals coupled to a production line for manufacturing cheese or a rennet-free dairy product.

The expression rennet-free milk product is understood to mean a product other than cheese whose main ingredient is milk and which has been obtained by processing milk. The term rennet is also intended to include lactic ferment for acidulating and curdling milk.

Such a method and milking machine are known from for example EP 0 666 024 A1.

A drawback of the known method and milking machine is, inter alia, that the end product is not readily traceable.

It is an object of the present invention to provide a method which removes said drawback at least partly. To this end, the invention provides a method according to Claim 1.

Due to the fact that the entire well-defined amount of milk undergoes every process step, the end product is reliably traceable. In addition, the direct production ensures a straightforward process without expensive separate transportation and flushing lines.

In an advantageous embodiment of the invention, the well-defined, measured amount of base milk is obtained from one dairy animal or from a predetermined group of dairy animals. This ensures an optimum traceability of the end product (such as cheese, ice cream or yoghurt).

In a further advantageous embodiment of the invention, the base milk is obtained using a fully automatic milking machine (milking robot). This offers many advantages. Milk production takes place throughout the day, so base milk is always available. By directly transporting the milk away, it is already at the correct temperature for a good rennet action if cheese is being manufactured. In addition, the milk may be processed directly without loss or cooling/heating.

It is advantageous if the production line comprises a number of separate processing locations where intermediate products are generated and/or treated, wherein the transportation between the processing locations and the mechanical handling of the base milk, the intermediate products and the cheese or rennet-free milk product in the processing locations is performed by means of a fully automatic robot vehicle (robotised automatic guided vehicle) which is provided for the purpose. This is not only highly efficient, but also very user-friendly. In order to produce the rennet-free milk product, any dairy-processing means which is known per se, such as a pasteurizer, homogeniser, coagulation machine or skimmer, may be situated at this processing location.

It is furthermore advantageous if, at a selection location of the production line, the milk obtained is distributed over a number of transport vessels for the base milk and a separation vessel for separating off any unsuitable milk which does not meet the quality standards which have been set. In this way, it is easy to generate the well-defined amounts of base milk.

It is particularly advantageous if the transport vessels containing the base milk are transported to a mixing location of the production line by means of the fully automatic robot vehicle. This is a highly efficient implementation.

It is advantageous if lactic ferment and/or calcium chloride and/or rennet are added to the base milk at the mixing location, wherein the latter is stirred by means of a drivable stirring means and is converted into curd with whey. As a result thereof, the automatic cheese production gets underway. There is thus no other milk which is admixed in the mixing location.

In addition, it is advantageous if, in the case of cheese production, transport vessels containing the base milk which has been converted into curd with whey are transported to a cutting location of the production line by means of the fully automatic robot vehicle. This is again a very efficient implementation.

Preferably, the curd with whey is cut into cubes by means of automatic cutting means at the cutting location, following which the whey is pumped off by means of automatic pumping means. These automated steps are very efficient and user-friendly.

In an embodiment, the entire contents of every transport vessel are transferred to a filter tray by means of the fully automatic robot vehicle in a filtration location to allow whey to drain from the curd. Again, this is a very efficient implementation.

Preferably, the whey is then expressed from the curd by means of automatic pressing means. Again, this is a very efficient implementation.

In a further embodiment, the entire contents of every filter tray are transferred to an individual brine tray in a brining location by means of the fully automatic robot vehicle in order to brine the curd in brine, so that it is converted into cheese. In this way, a traceable cheese product is produced in an efficient manner.

In yet a further embodiment, the entire contents of every filter tray are transferred to a resting tray in a resting location by means of the fully automatic robot vehicle and are then transferred in their entirety to an individual brine tray in a brining location by means of the fully automatic robot vehicle in order to brine the curd in brine, so that it is converted into cheese. The time spent in the resting tray has a positive effect on the cheese production.

Preferably, the entire contents of every brine tray are transferred to a storage location by means of the fully automatic robot vehicle to allow the cheese to mature further. Yet again, this is very efficient implementation.

In a further embodiment, the cheeses in the storage location are turned regularly by means of the fully automatic robot vehicle. Again, this is a very efficient implementation.

It is advantageous if the cheeses in the storage location are provided, by means of the fully automatic robot vehicle, with a label containing information about the composition of the cheese and/or about the dairy animal or the dairy animals from which the base milk stems. In this way, a traceable end product is produced in a user-friendly way.

Preferably, transport vessels and/or filter trays and/or brine trays are cleaned in a cleaning location by means of the fully automatic robot vehicle. Again, this is a very efficient implementation.

It is highly advantageous if the salt content of the brine is monitored in the brine trays by means of a salt sensor. In this way, the process may be monitored in an optimum manner. Preferably, the residence time of the intermediate product in the brine tray is controlled by means of the measured salt content. This yields excellent results.

It is a further object of the present invention to provide a milking machine which at least partly removes said drawback. To this end, the invention provides a combination of a milking machine for milking dairy animals and a production line coupled thereto for manufacturing cheese or rennet-free dairy product according to Claim 3.

Due to the fact that the entire well-defined amount of milk undergoes every process step, the end product is reliably traceable. In addition, the direct production ensures a straightforward process without expensive separate transportation and flushing lines. The fully automatic robot vehicle ensures an efficient production process.

In an advantageous embodiment of the invention, the milking machine is a fully automatic milking machine (milking robot). This offers many advantages. Milk production takes place throughout the day, so base milk is always available. By directly transporting the milk away, it is already at the correct temperature for a good rennet action if cheese is being manufactured. In addition, the milk may be processed directly without loss or cooling/heating.

Preferably, the fully automatic robot vehicle is provided with a navigation system. This makes a quick and efficient process possible.

In a further embodiment of the invention, the fully automatic robot vehicle is provided with at least one gripper means. This facilitates a number of process steps.

It is advantageous if a selection location in the production line is provided with a number of transport vessels for the base milk and a separation vessel for the optional removal of unsuitable milk which does not meet quality standards. In this way, it is easy to produce the well-defined amounts of base milk.

It is also likewise advantageous if the fully automatic robot vehicle is suitable for transporting the transport vessels with the base milk to a mixing location which is provided in the production line. This is a very efficient implementation.

Preferably, means are provided at the mixing location in the case of cheese production for adding lactic ferment and/or calcium chloride and/or rennet to the base milk, wherein a drivable stirring means is provided for stirring the base milk, wherein the latter is converted into curd with whey. As a result thereof, the automatic cheese production gets underway. At the mixing location, no other milk is stirred in.

It is particularly advantageous if the fully automatic robot vehicle is suitable for transporting the transport vessels with the base milk converted into curd with whey to a cutting location which is provided in the production line. This is, again, a very efficient implementation.

Preferably, automatic cutting means are provided at the cutting location for cutting the curd with whey into cubes, as well as automatic pumping means for pumping off the whey. This makes it possible to use automated steps which are very efficient and user-friendly.

It is advantageous if the fully automatic robot vehicle is suitable for transferring the entire contents of every transport vessel to a filtration location which is provided in the production line and comprises filter trays to allow the whey to drain from the curd. Again, this is a very efficient implementation.

Preferably, automatic pressing means are provided (for example at the filtration location) for subsequently expressing whey from the curd. Again, this is a very efficient implementation.

It is advantageous if the fully automatic robot vehicle is suitable for transferring the entire contents of every filter tray to an individual brining location which is provided in the production line and comprises individual brine trays for soaking the curd in brine, so that these are converted into cheese. In this way, a traceable cheese product is produced in an efficient manner.

In a further embodiment of the invention, the fully automatic robot vehicle is suitable for transferring the entire contents of every filter tray to a resting location which is provided in the production line and comprises resting trays for the intermediate products, and the fully automatic robot vehicle is furthermore suitable for transferring the entire contents of every resting tray to an individual brining location which is provided in the production line and comprises individual brine trays for soaking the curd in brine, so that these are converted into cheese. The time spent in the resting tray has a positive effect on the cheese production.

Preferably, the fully automatic robot vehicle is suitable for transferring the entire contents of every brine tray to a storage location which is provided in the production line for maturing the cheese further. This is again a very efficient implementation.

In yet a further embodiment, the fully automatic robot vehicle is suitable for regularly turning the cheeses in the storage location. This is again a very efficient implementation.

It is advantageous if the fully automatic robot vehicle is suitable for providing the cheeses in the storage location with a label containing information about the composition of the cheese and/or about the dairy animal or the dairy animals from which the base milk stems.

In this way, a traceable end product is produced in a user-friendly way.

In yet a further embodiment, a cleaning location is provided in the production line for cleaning transport vessels and/or filter trays and/or brine trays by means of the fully automatic robot vehicle. This is again a very efficient implementation.

It is particularly advantageous if a salt sensor is provided in the individual brine trays for monitoring the salt content of the brine. In this way, the process may be monitored in an optimum manner.

Preferably, the individual brine trays are provided with means for controlling the residence time of the intermediate product in the brine tray by means of the measured salt content. This has proved to give excellent results.

It is advantageous if the salt sensor is a conductivity sensor. This is an efficient implementation.

The invention (both the method and the milking machine with the automatic production line for cheese) will be explained below by means of one or more exemplary embodiments and drawings, in which:
Figure 1 diagrammatically shows a milking robot with a selection location of the production line;
Figure 2 diagrammatically shows a mixing location of the production line;
Figure 3 diagrammatically shows a cutting location of the production line;
Figure 4 diagrammatically shows a transport vessel from which whey is pumped out;
Figure 5 diagrammatically shows a microfilter tray above a drip tray of the production line;
Figure 6 diagrammatically shows two microfilter trays above a drip tray, each containing a whole cheese and a press;
Figure 7 diagrammatically shows two resting trays of the production line, each containing a whole cheese;
Figure 8 diagrammatically shows a brine tray of the production line containing a whole cheese;
Figure 9 diagrammatically shows a fully automatic robot vehicle of the production line which is suitable for turning maturing cheeses on shelves by means of a gripping arm;
Figure 10 diagrammatically shows a cleaning location of the production line for transport vessels or other trays.

With the method for the milking of dairy animals and the manufacturing of cheese or rennet-free milk product from the milk obtained according to the invention, a well-defined, measured amount of base milk which meets quality standards and which is not mixed with other milk is obtained. Subsequently, cheese or rennet-free milk product is manufactured directly by means of a fully automatic production line from the base milk obtained.

The well-defined and measured amount of base milk, the origin of which is identified, may be obtained from one dairy animal or from a predetermined group of dairy animals. In this way, the origin of the end product, cheese or rennet-free milk product, is traceable in an optimum manner: the cheese or rennet-free milk product can directly be associated with the dairy animal or with the dairy animals from which the milk obtained originates.

In the manufacturing process every process step (such as will be explained: transportation from the milking robot, producing the curd, microfiltration, pressing, soaking in brine) is carried out with the same milk batch which stems from one single milking. Transportation to the various processing locations and processing takes place by means of a fully automatic robot vehicle with gripping arms. In this way, a unique cheese or rennet-free dairy product may be produced from each batch.

It is advantageous if the base milk is obtained using a fully automatic milking machine (milking robot). This is capable of supplying base milk throughout the day which can then be processed immediately in the automatic production line while still fresh to produce cheese or rennet-free milk product.

As will be explained below, the production line comprises a number of separate processing locations where intermediate products are generated and/or treated, where the transportation between the processing locations and the mechanical handling of the base milk, the intermediate products and the cheese or rennet-free milk product in the processing locations takes place by means of a fully automatic robot vehicle (robotised automatic guided vehicle) provided for the purpose.

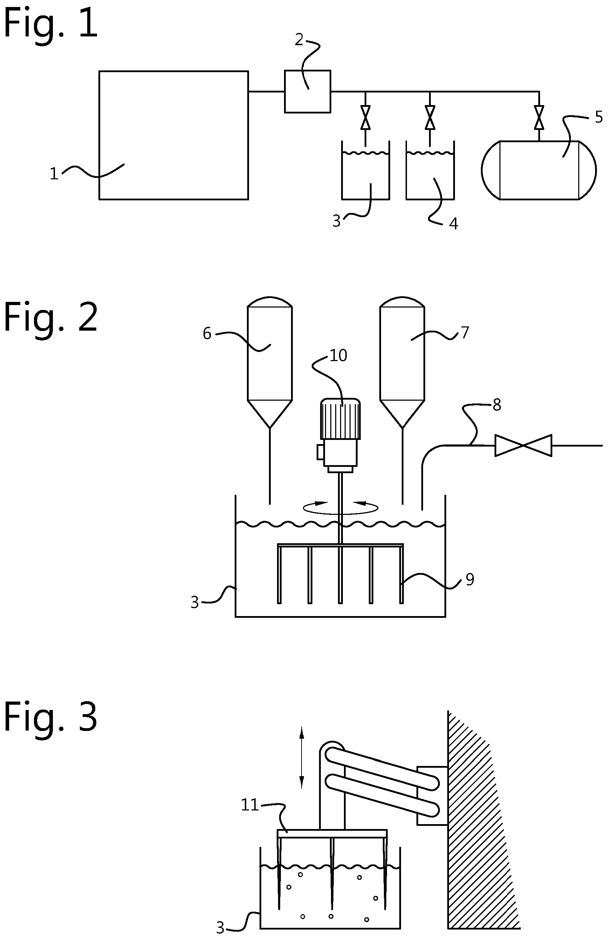

Figure 1 shows a first part of a production line for cheese according to the invention, namely the selection location. A milking robot 1 comprising a milk-collecting vessel 2 for the obtained base milk is illustrated diagrammatically. From the latter, the milk is passed selectively to a first transport vessel 3, to a second transport vessel 4 or to a central separation vessel 5. This last vessel 5 is intended for discharging unsuitable milk which does not meet quality standards, as may be measured in or near the milk-collecting vessel 2 using measuring means (not shown) which are known per se.

Preferably, the batch milk in every transport vessel 3, 4 originates from one cow or from a predetermined, well-identified group of cows: the end product (a small cheese) can then be traced back to that separate cow or that well-defined group of cows.

Of course, if there is too little milk for a batch, this milk may be returned to the central milk-collecting vessel 2, as may a possible excess of milk after a batch has been filled.

When the milk has reached the correct temperature (approx. 28°C), the milk may be converted to curdle. In this case, lactic ferment and rennet are added to the milk. Rennet is an enzyme which causes the proteins in the milk to coagulate. Lactic ferment is a concentrate from lactic ferment bacteria which turns milk sugar (lactose) into lactic acid, as a result of which the cheese is able to mature well. In addition, the type of lactic ferment partly determines the flavour and the aroma of the cheese and the formation of holes. In addition, the acidification of the milk also stimulates the curdling.

Figure 2 diagrammatically shows a mixing location of the production line. The transport vessels 3, 4 containing the base milk are transported to this mixing location by means of the fully automatic robot vehicle (shown later). At the mixing location, lactic ferment, rennet and/or water are added to a transport vessel 3 containing base milk. To this end, the illustrated embodiment is provided with a lactic ferment metering device 6, a rennet metering device 7 and an adjustable water supply 8. Furthermore, the mixture is then stirred by means of a drivable stirring means in the form of a fork 9 using a drive means 10. In this case, the base milk is converted into curd with whey. This takes place during a time period of one hour.

In addition, it is also possible for calcium chloride and/or colourants and/or herbs to be added according to a specific recipe. Furthermore, cooling or heating may be carried out in order to achieve an ideal temperature, for example by means of a cooling or heating spiral (not shown) which is known per se.

With the production of a rennet-free milk product, additives such as colourants and bacteria may also be added at the mixing location. Figure 3 diagrammatically shows a cutting location of the production line. The transport vessels 3, 4 containing the base milk converted into curd with whey are transported to this cutting location by means of the fully automatic robot vehicle. There, the curd is slowly and carefully cut into cubes or other pieces by means of automatic cutting means 11. The cutting means 11 comprise for example a vertical cutting blade which is fitted so as to be foldable or vertically displaceable.

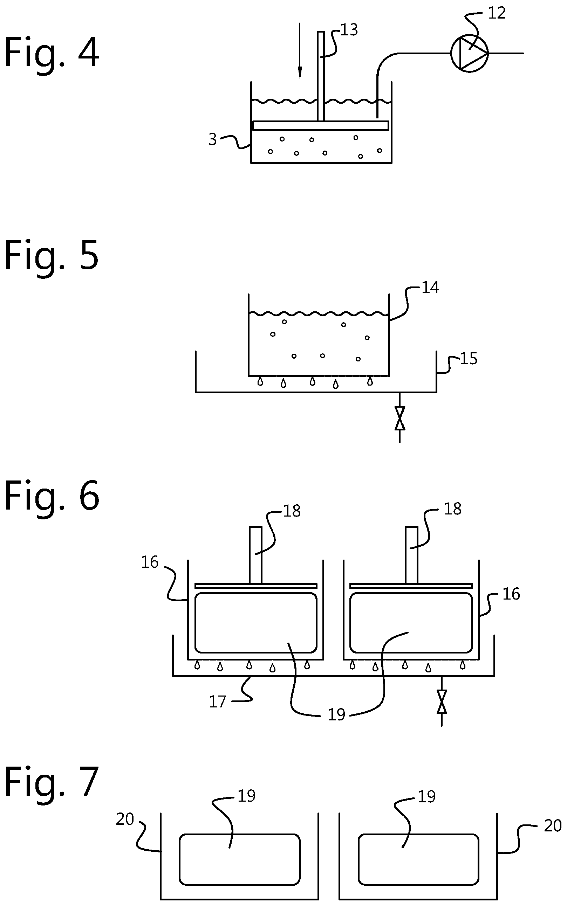

Figure 4 diagrammatically illustrates a transport vessel from which whey is pumped out. After cutting at the cutting location, the whey is pumped off by means of automatic pumping means. The pumping means may comprise a pump 12, if desired in combination with pressing means 13.

Figure 5 diagrammatically shows a microfilter tray above a drip tray in the production line. The entire contents of every transport vessel 3 (the mixture of curd and whey) are transferred to a filter tray 14 in a filtration location by means of the fully automatic robot vehicle in order to allow the whey to drain from the curd. In this case, the drained-off whey is collected in the drip tray 15 and may be used as a base material for soft drinks or in animal feed. What remains behind in the microfilter tray 14 is a moist lump of curd.

Subsequently, the last remainder of whey is expressed from the curd by means of automatic pressing means. Figure 6 diagrammatically shows two cheese trays above a drip tray, each comprising a whole cheese and a press. The contents of every filter tray 14 are transferred to a so-called cheese tray 16 by means of the fully automatic robot vehicle, for example a plastic tray with holes at the bottom. The fully automatic robot vehicle also takes the cheese trays 16 to a pressing location, where the curd is pressed further and the drained-off whey is again collected in a drip tray 17, following which it can then be processed further. Pressing is performed by means of pressing means 18. What remains is a whole cheese 19.

Alternatively, pressing the curd further may be performed directly on the curd in the microfilter trays 14. In this case, fewer operations are required.

Figure 7 diagrammatically shows two so-called resting trays in the production line, each containing a whole cheese. The entire contents of every cheese tray 16 (whole cheese 19) shown in Figure 6 are transferred to a resting tray 20 in this resting location by means of the fully automatic robot vehicle. The resting trays 20 (in another embodiment, the cheese trays 16 themselves may also be used for this purpose, thus reducing the number of operations) serve as a resting location for the whole cheeses 19 which may remain there for a few days, for example.

It is also possible to skip this resting location and to process the whole cheeses 19 further directly from the cheese trays 16 (or even directly from the filter trays 14, after pressing them there).

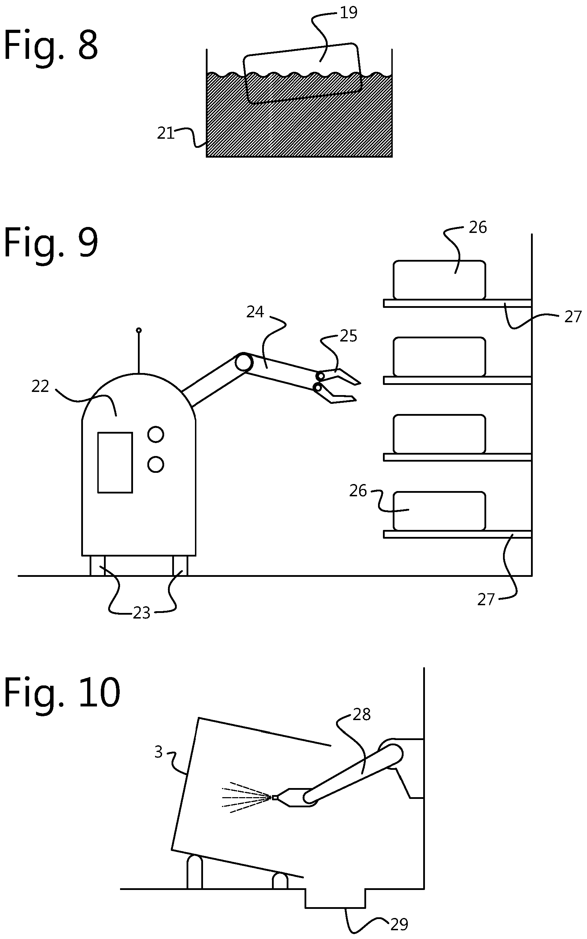

Figure 8 diagrammatically illustrates a brine tray in the production line containing a whole cheese. The entire contents of every resting tray 20 (or cheese tray 16 or filter tray 14, as explained above) are transferred to an individual brine tray 21 in a brining location by means of the fully automatic robot vehicle in order to soak the curd in brine, so that it is converted into cheese. The whole cheese 19 (the moist lump of cheese) is thus turned into an individual cheese in its own brine tray 21. It is already raw cheese, still without rind, by soaking in brine, still more moisture is extracted from the cheese and salt is absorbed by the cheese. In this case, every cheese may be treated according to an individual recipe, for example having its own salt concentration, its own residence time in the brine, etc. Obviously, parameters such as pressure value, pressure duration, initial value of the protein and fat content of the milk also play an important part in the resulting flavour.

Figure 9 diagrammatically shows a fully automatic robot vehicle of the production line which is suitable for turning maturing cheeses on shelves by means of a gripping arm. The fully automatic robot vehicle 22 is a freely movable robot on wheels 23 and is provided with at least one robot arm 24 comprising a gripper 25. The entire contents of every brine tray 21 are transferred to a storage location by means of the fully automatic robot vehicle 22 in order to allow the cheese 26 to mature further. In this storage location, the cheeses 26 which are situated on shelves 27 in order to mature, are regularly turned by means of the fully automatic robot vehicle 22. The cheeses 26 remain in said storage location for example for a few weeks up to a few months. The residence time is partly determined by the recipe for the respective cheese.

In addition, the cheeses 26 in the storage location may be provided, by means of the fully automatic robot vehicle 22, with a label containing information about the composition of the cheese and/or the dairy animal or the dairy animals from which the base milk was obtained. This results in an individual, perfectly traceable cheese. Not only can the label be used to indicate which individual cow or group or family of cows the cheese stems, but it may also contain data about the specific composition or further particulars, such as specifically the feed for the respective cow, or whether the cow is a cow that has recently calved or is in late lactation, etc.

It is also possible to apply a layer of wax or another coating to the cheeses 26 in the storage location by means of the fully automatic robot vehicle 22.

As has been described, the production line is fully automatic and comprises a number of separate processing locations where intermediate products from the base milk are generated and/or treated, wherein the transportation between the processing locations of the base milk, the intermediate products and the cheese in the processing locations is performed by means of the fully automatic robot vehicle 22 (robotised automatic guided vehicle) which is provided for the purpose. Preferably, the fully automatic robot vehicle 22 is provided with a navigation system. By means thereof, the vehicle is able to perform all the necessary movements and displacements in an efficient manner.

Finally, Figure 10 diagrammatically shows a cleaning location of the production line for transport vessels or other trays. The transport vessels 3,4 and/or the filter trays 14 and/or the cheese trays 16 and/or the resting trays 20 and/or the brine trays 21 are taken to a cleaning location by means of the fully automatic robot vehicle 22 and cleaned there. To this end, an automatically controllable cleaning arm 28 with a spray head is provided. The cleaning liquid may be discharged via a drainage channel 29.

Preferably, a salt sensor is provided in the individual brine trays 21 for monitoring the salt content of the brine. In addition, means are provided near the individual brine trays 21 for controlling the residence time of the intermediate product in the brine tray 21 by means of the measured salt content. The salt sensor is, for example, a conductivity sensor (not shown) which is known per se. In this way, it is possible partly to determine the final desired flavour of the cheese exactly in accordance with the recipe.

Thus, the fully automatic production line has been described, including the selection location, the mixing location, the cutting location, the filtration location, the pressing location, the resting location, the brining location, the storage location and the cleaning location. The various vessels and trays pass through these locations in order to produce the end product cheese. Typically, the system may comprise two transport vessels 3, 4, four filter trays 14, eight cheese trays 16, eight resting trays 20, and approximately 75 brine trays 21.

As has already been described above, the resting locations may be omitted or be combined with the brining locations for the sake of clarity.

## Claims

1. Method for milking dairy animals and manufacturing cheese (26) or rennet-free dairy product from the milk obtained, wherein the method comprises the following steps:
a) milking a well-defined, measured amount of base milk which satisfies quality standards which have been set and which is not mixed with other milk;
b) manufacturing cheese or rennet-free dairy product by means of a fully automatic production line (1-28) directly from the base milk obtained, wherein the production line (1-28) comprises a number of separate processing locations where intermediate products are generated and/or treated, wherein the transportation between the processing locations of the base milk, the intermediate products and the cheese (26) or rennet-free milk product in the processing locations is performed by means of a fully automatic robot vehicle (22) which is provided for the purpose.

2. Method according to Claim 1, **characterized in that** the well-defined, measured amount of base milk is obtained from one dairy animal or a predetermined group of dairy animals.

3. A combination of a milking machine for milking dairy animals and a production line coupled thereto for manufacturing cheese or rennet-free dairy product, wherein the production line is configured for producing the cheese or rennet-free dairy product from a well-defined, measured amount of base milk which has been obtained beforehand by means of the milking machine (1) and which meets quality standards which have been set and is not mixed with other milk, which production line (1-28) is fully automatic and comprises a number of separate processing locations configured for generating and/or treating intermediate products from the base milk, wherein a fully automatic robot vehicle (22) is provided and configured for the transportation between the processing locations of the base milk, the intermediate products and the cheese (26) or rennet-free dairy product in the processing locations.

4. The combination according to claim 3, **characterized in that** in the production line (1-28) a selection location is provided with a number of transport vessels (3, 4) for the base milk and a separation vessel (5) for separating off any unsuitable milk which does not meet quality standards which have been set.

5. The combination according to Claim 4, **characterized in that** the fully automatic robot vehicle (22) is suitable for transporting the transport vessels (3, 4) containing the base milk to a mixing location which is provided in the production line (1-28).

6. The combination according to Claim 5, **characterized in that** means (6, 7, 8) are provided at the mixing location for adding lactic ferment and/or calcium chloride and/or rennet to the base milk, wherein a drivable stirring means (9, 10) is provided for stirring the base milk, wherein the latter is converted into curd with whey.

7. The combination according to Claim 6, **characterized in that** the fully automatic robot vehicle (22) is suitable for transporting the transport vessels (3, 4) containing the base milk converted into curd with whey to a cutting location, provided in the production line (1-28), automatic cutting means (11) being provided at the cutting location for cutting the curd into cubes, as well as automatic pumping means (12, 13) for pumping off the whey.

8. The combination according to one of Claims 5 to 7, **characterized in that** the fully automatic robot vehicle (22) is suitable for transferring the entire contents of every transport vessel (3, 4) to a filtration location which is provided in the production line (1-28) and comprises filter trays (14) to allow the whey to drain from the curd.

9. The combination according to Claim 8, **characterized in that** automatic pressing means (18) are provided for subsequently expressing whey from the curd.

10. The combination according to Claim 8 or 9, **characterized in that** the fully automatic robot vehicle (22) is suitable for transferring the entire contents of every filter tray (14) to an individual brining location which is provided in the production line (1-28), and comprises individual brine trays (21) for soaking the curd in brine, so that this is converted into cheese (26).

11. The combination according to Claim 8 or 9, **characterized in that** the fully automatic robot vehicle (22) is suitable for transferring the entire contents of every filter tray (14) to a resting location which is provided in the production line (1-28) and comprises resting trays (20) for the intermediate products, and the fully automatic robot vehicle (22) is furthermore suitable for transferring the entire contents of every resting tray (20) to an individual brining location which is provided in the production line (1-28) and comprises individual brine trays (21) for soaking the curd in brine, so that this is converted into cheese (26).

12. The combination according to Claim 10 or 11, **characterized in that** the fully automatic robot vehicle (22) is suitable for transferring the entire contents of every brine tray (21) to a storage location which is provided in the production line (1-28) in order for the cheese (26) to mature further.

13. The combination according to Claim 12, **characterized in that** the fully automatic robot vehicle (22) is suitable for regularly turning the cheeses (26) in the storage location and/or suitable for providing the cheeses (26) in the storage location with a label containing information about the composition of the cheese and/or about the dairy animal or the dairy animals from which the base milk stems.

14. The combination according to one of Claims 10 to 13, **characterized in that** a salt sensor, preferable a conductivity sensor, is provided in the individual brine trays (21) for monitoring the salt content of the brine, and **in that** means are provided near the individual brine trays (21) for controlling the residence time of the intermediate product in the brine tray by means of the measured salt content.

## Patentansprüche

1. Verfahren zum Melken von Milchtieren und zum Herstellen von Käse (26) oder labfreiem Milchprodukt aus der erhaltenen Milch, wobei das Verfahren die folgenden Schritte umfasst:
a) Melken einer genau definierten, abgemessenen Menge Basismilch, die festgelegten Qualitätsstandards entspricht und nicht mit anderer Milch vermischt wird;
b) Herstellen von Käse oder labfreiem Milchprodukt mittels einer vollautomatischen Produktionslinie (1-28) direkt aus der erhaltenen Basismilch, wobei die Produktionslinie (1-28) eine Anzahl separater Verarbeitungsstellen umfasst, an denen Zwischenprodukte erzeugt und/oder behandelt werden, wobei der Transport zwischen den Verarbeitungsstellen der Basismilch, der Zwischenprodukte und des Käses (26) oder des labfreien Milchprodukts in den Verarbeitungsstellen mittels eines vollautomatischen Roboterfahrzeugs (22) erfolgt, das für diesen Zweck bereitgestellt ist.

2. Verfahren nach Anspruch 1, **dadurch gekennzeichnet, dass** die genau definierte, abgemessene Menge Basismilch von einem Milchtier oder einer vorbestimmten Gruppe von Milchtieren erhalten wird.

3. Kombination aus einer Melkmaschine zum Melken von Milchtieren und einer damit gekoppelten Produktionslinie zur Herstellung von Käse oder labfreiem Milchprodukt, wobei die Produktionslinie zur Herstellung des Käses oder des labfreien Milchprodukts aus einer genau definierten, abgemessenen Menge Basismilch konfiguriert ist, die zuvor mittels der Melkmaschine (1) erhalten wurde und die festgelegten Qualitätsstandards entspricht und nicht mit anderer Milch vermischt ist, wobei die Produktionslinie (1-28) vollautomatisch ist und eine Anzahl separater Verarbeitungsstellen umfasst, die zur Erzeugung und/oder Behandlung von Zwischenprodukten aus der Basismilch konfiguriert sind, wobei ein vollautomatisches Roboterfahrzeug (22) bereitgestellt und für den Transport zwischen den Verarbeitungsstellen der Basismilch, der Zwischenprodukte und des Käses (26) oder des labfreien Milchprodukts in den Verarbeitungsstellen konfiguriert ist.

4. Kombination nach Anspruch 3, **dadurch gekennzeichnet, dass** in der Produktionslinie (1-28) eine Selektionsstelle mit einer Anzahl von Transportbehältern (3, 4) für die Basismilch und einem Trennbehälter (5) zur Abtrennung von ungeeigneter Milch, die nicht den festgelegten Qualitätsstandards entspricht, bereitgestellt ist.

5. Kombination nach Anspruch 4, **dadurch gekennzeichnet, dass** das vollautomatische Roboterfahrzeug (22) geeignet ist, die Transportbehälter (3, 4) mit der Basismilch zu einer in der Produktionslinie (1-28) bereitgestellten Mischstelle zu transportieren.

6. Kombination nach Anspruch 5, **dadurch gekennzeichnet, dass** an der Mischstelle Mittel (6, 7, 8) zur Zugabe von Milchferment und/oder Calciumchlorid und/oder Lab in die Basismilch bereitgestellt sind, wobei ein antreibbares Rührmittel (9, 10) zum Rühren der Basismilch bereitgestellt ist, wobei letztere in Käsebruch mit Molke umgewandelt wird.

7. Kombination nach Anspruch 6, **dadurch gekennzeichnet, dass** das vollautomatische Roboterfahrzeug (22) geeignet ist, die Transportbehälter (3, 4) mit der in Käsebruch mit Molke umgewandelten Basismilch zu einer in der Produktionslinie (1-28) bereitgestellten Schneidestelle zu transportieren, wobei an der Schneidestelle automatische Schneidmittel (11) zum Schneiden des Käsebruchs in Würfel sowie automatische Pumpmittel (12, 13) zum Abpumpen der Molke bereitgestellt sind.

8. Kombination nach einem der Ansprüche 5 bis 7, **dadurch gekennzeichnet, dass** das vollautomatische Roboterfahrzeug (22) geeignet ist, den gesamten Inhalt jedes Transportbehälters (3, 4) an eine Filtrationsstelle zu überführen, die in der Produktionslinie (1-28) bereitgestellt ist und Filterschalen (14) umfasst, um die Molke aus dem Käsebruch ablaufen zu lassen.

9. Kombination nach Anspruch 8, **dadurch gekennzeichnet, dass** automatische Pressmittel (18) für ein anschließendes Auspressen von Molke aus dem Käsebruch bereitgestellt sind.

10. Kombination nach Anspruch 8 oder 9, **dadurch gekennzeichnet, dass** das vollautomatische Roboterfahrzeug (22) geeignet ist, den gesamten Inhalt jeder Filterschale (14) an eine individuelle Salzlakenbehandlungsstelle zu überführen, die in der Produktionslinie (1-28) bereitgestellt ist und individuelle Salzlakenschalen (21) zum Einweichen des Bruchs in Salzlake umfasst, so dass dieser in Käse (26) umgewandelt wird.

11. Kombination nach Anspruch 8 oder 9, **dadurch gekennzeichnet, dass** das vollautomatische Roboterfahrzeug (22) geeignet ist, den gesamten Inhalt jeder Filterschale (14) an eine Ruhestelle zu überführen, die in der Produktionslinie (1-28) bereitgestellt ist und Ruheschalen (20) für die Zwischenprodukte umfasst, und das vollautomatische Roboterfahrzeug (22) ferner geeignet ist, den gesamten Inhalt jeder Ruheschale (20) an eine individuelle Salzlakenbehandlungsstelle zu überführen, die in der Produktionslinie (1-28) bereitgestellt ist und individuelle Salzlakenschalen (21) zum Einweichen des Käsebruchs in Salzlake umfasst, so dass dieser in Käse (26) umgewandelt wird.

12. Kombination nach Anspruch 10 oder 11, **dadurch gekennzeichnet, dass** das vollautomatische Roboterfahrzeug (22) geeignet ist, den gesamten Inhalt jeder Salzlakenschale (21) an eine Lagerstelle zu überführen, die in der Produktionslinie (1-28) bereitgestellt ist, um den Käse (26) weiter reifen zu lassen.

13. Kombination nach Anspruch 12, **dadurch gekennzeichnet, dass** das vollautomatische Roboterfahrzeug (22) geeignet ist, die Käselaibe (26) an der Lagerstelle regelmäßig zu wenden, und/oder geeignet ist, die Käselaibe (26) an der Lagerstelle mit einem Etikett zu versehen, das Informationen über die Zusammensetzung des Käses und/oder über das Milchtier bzw. die Milchtiere enthält, von denen die Basismilch stammt.

14. Kombination nach einem der Ansprüche 10 bis 13, **dadurch gekennzeichnet, dass** in den individuellen Salzlakeschalen (21) ein Salzsensor, bevorzugt ein Leitfähigkeitssensor, zur Überwachung des Salzgehaltes der Salzlake bereitgestellt ist, und dass in der Nähe der individuellen Salzlakeschalen (21) Mittel zur Steuerung der Verweilzeit des Zwischenprodukts in der Salzlakeschale anhand des gemessenen Salzgehaltes bereitgestellt sind.

## Revendications

1. Procédé de traite d'animaux laitiers et de fabrication de fromage (26) ou de produit laitier sans présure à partir du lait obtenu, le procédé comprenant les étapes suivantes :
a) la traite d'une quantité mesurée bien définie de lait de base qui satisfait aux normes de qualité fixées et qui n'est pas mélangé à d'autres laits ;
b) la fabrication de fromage ou de produit laitier sans présure au moyen d'une chaîne de production entièrement automatique (1-28) directement à partir du lait de base obtenu, la chaîne de production (1-28) comprenant un certain nombre de sites de traitement séparés où des produits intermédiaires sont produits et/ou traités, le transport entre les sites de traitement du lait de base, des produits intermédiaires et du fromage (26) ou du produit laitier sans présure dans les sites de traitement étant réalisé au moyen d'un véhicule robot entièrement automatique (22) prévu à cet effet.

2. Procédé selon la revendication 1, **caractérisé en ce que** la quantité mesurée bien définie de lait de base est obtenue à partir d'un animal laitier ou d'un groupe prédéterminé d'animaux laitiers.

3. Combinaison d'une machine à traire pour traire des animaux laitiers et d'une chaîne de production couplée à celle-ci pour fabriquer du fromage ou un produit laitier sans présure, dans laquelle la chaîne de production est conçue pour produire le fromage ou le produit laitier sans présure à partir d'une quantité mesurée bien définie de lait de base qui a été obtenu au préalable au moyen de la machine à traire (1) et qui répond aux normes de qualité fixées et qui n'est pas mélangé à d'autres laits, la chaîne de production (1-28) étant entièrement automatique et comprenant un certain nombre de sites de traitement séparés conçus pour la production et/ou le traitement de produits intermédiaires à partir du lait de base, un véhicule robot entièrement automatique (22) étant fourni et configuré pour le transport entre les sites de traitement du lait de base, des produits intermédiaires et du fromage (26) ou du produit laitier sans présure dans les sites de traitement.

4. Combinaison selon la revendication 3, **caractérisée en ce que** dans la chaîne de production (1-28), un site de sélection est doté d'un certain nombre de récipients de transport (3, 4) pour le lait de base et d'un récipient de séparation (5) pour séparer tout lait inapproprié qui ne répond pas aux normes de qualité fixées.

5. Combinaison selon la revendication 4, **caractérisée en ce que** le véhicule robot entièrement automatique (22) est conçu pour transporter les récipients de transport (3, 4) contenant le lait de base vers un site de mélange qui est placé dans la chaîne de production (1-28).

6. Combinaison selon la revendication 5, **caractérisée en ce que** des moyens (6, 7, 8) sont fournis au site de mélange pour ajouter du ferment lactique et/ou du chlorure de calcium et/ou de la présure au lait de base, un moyen d'agitation (9, 10) pouvant être entraîné étant fourni pour agiter le lait de base, ce dernier étant transformé en caillé avec du petit-lait.

7. Combinaison selon la revendication 6, **caractérisée en ce que** le véhicule robot entièrement automatique (22) est conçu pour transporter les récipients de transport (3, 4) contenant le lait de base transformé en caillé avec du petit-lait vers un site de coupe, placé dans la chaîne de production (1-28), des moyens de coupe automatiques (11) étant fournis au site de coupe pour couper le caillé en cubes, ainsi que des moyens de pompage automatiques (12, 13) pour pomper le petit-lait.

8. Combinaison selon l'une des revendications 5 à 7, **caractérisée en ce que** le véhicule robot entièrement automatique (22) est conçu pour transférer la totalité du contenu de chaque récipient de transport (3, 4) vers un site de filtration qui est placé dans la chaîne de production (1-28) et qui comprend des plateaux filtrants (14) pour permettre au petit-lait de s'écouler du caillé.

9. Combinaison selon la revendication 8, **caractérisée en ce que** des moyens de pressage automatiques (18) sont fournis pour extraire ensuite le petit-lait du caillé.

10. Combinaison selon la revendication 8 ou 9, **caractérisée en ce que** le véhicule robot entièrement automatique (22) est conçu pour transférer la totalité du contenu de chaque plateau filtrant (14) vers un site de saumurage individuel qui est placé dans la chaîne de production (1-28) et comprend des bacs à saumure individuels (21) pour tremper le caillé dans de la saumure, de sorte que celui-ci soit transformé en fromage (26).

11. Combinaison selon la revendication 8 ou 9, **caractérisée en ce que** le véhicule robot entièrement automatique (22) est conçu pour transférer la totalité du contenu de chaque plateau filtrant (14) vers un site de repos qui est placé dans la chaîne de production (1-28) et comprend des plateaux de repos (20) pour les produits intermédiaires, et le véhicule robot entièrement automatique (22) est en outre conçu pour transférer la totalité du contenu de chaque plateau de repos (20) vers un site de saumurage individuel qui est placé dans la chaîne de production (1-28) et comprend des bacs à saumure individuels (21) pour tremper le caillé dans de la saumure, de sorte que celui-ci soit transformé en fromage (26).

12. Combinaison selon la revendication 10 ou 11, **caractérisée en ce que** le véhicule robot entièrement automatique (22) est conçu pour transférer la totalité du contenu de chaque bac à saumure (21) vers un site de stockage qui est placé dans la chaîne de production (1-28) afin que le fromage (26) mûrisse davantage.

13. Combinaison selon la revendication 12, **caractérisée en ce que** le véhicule robot entièrement automatique (22) est conçu pour retourner régulièrement les fromages (26) dans le site de stockage et/ou conçu pour munir les fromages (26) dans le site de stockage d'une étiquette contenant des informations sur la composition du fromage et/ou sur l'animal laitier ou les animaux laitiers dont provient le lait de base.

14. Combinaison selon l'une des revendications 10 à 13, **caractérisée en ce qu'**un capteur de sel, de préférence un capteur de conductivité, est placé dans les bacs à saumure individuels (21) pour surveiller la teneur en sel de la saumure et **en ce que** des moyens sont fournis à proximité des bacs à saumure individuels (21) pour commander le temps de séjour du produit intermédiaire dans le bac à saumure au moyen de la teneur en sel mesurée.
